# EUROPEAN PATENT SPECIFICATION

(11) **EP 4 053 660 B1**
(45) Date of publication and mention of the grant of the patent: **08.01.2025**
(21) Application number: 21160932.6
(22) Date of filing: 05.03.2021
(51) Int. Cl.: G05B 23/02

(54) **DIAGNOSTIC DEVICE AND METHOD FOR A ROTATING MACHINE**
DIAGNOSEVORRICHTUNG UND -VERFAHREN FÜR EINE ROTIERENDE MASCHINE
DISPOSITIF DE DIAGNOSTIC ET PROCÉDÉ POUR UNE MACHINE ROTATIVE

(43) Date of publication of application: 07.09.2022
(73) Proprietor: Hitachi, Ltd., Tokyo 100-8280 (JP)
(72) Inventor: KATO, Tetsuji, London, EC2Y (GB); YAMASHITA, Tomoaki, London, EC2Y (GB); UEMURA, Takuya, Tokyo, 100-8280 (JP); ENOKIDA, Kouichi, Tokyo, 100-8280 (JP); DEGUCHI, Kenta, Tokyo, 100-8280 (JP)
(74) Representative: MERH-IP Matias Erny Reichl Hoffmann Patentanwälte PartG mbB

(56) References cited:
- JP-A- H09 166 483

## Description

The present disclosure relates to a diagnostic device for a rotating machine which may be a motor of an industrial machine, such as an electric motor of a vehicle, a compressor, a turbine. Further, the rotating machine may be another rotating component of an industrial machine, such as a gear, and/or the like. The diagnostic device enables to improve the accuracy of a state diagnosis of the rotating machine and, at the same time, it reduces the requirements for the diagnosis equipment. In particular, the present disclosure shall enable to determine accurate frequency diagrams of an undersampled measurement signal with which the state of the rotating machine can be diagnosed accurately.

### Background

When equipment breaks down, unplanned outages including related equipment occur. In addition, since it takes time to arrange an alternative machine or to repair the machine, there is an increasing need to detect signs of equipment failure during normal operation with high accuracy. At the same time, however, there is a need for decreasing the complexity of the diagnosing device and it would be desirable that low-speed sampled measurement signals could be used for the diagnosis without impairing or reducing the accuracy of the diagnosis. The use of low-speed sampling, for example, reduces the amount of data which reduces hardware requirements and computational burden. In connection with the present disclosure the term low-speed sampling shall preferably refer to a sampling rate which does not fulfill the Nyquist criterion. The term undersampling shall be used alternatively in this context.

Furthermore, as further background to the present disclosure, it is known that a waveform based on vibration or current signals can be used for the diagnosis of rotating machines or components thereof. The waveform, which is usually measured or determined in the time domain, i.e. a measurement value, e.g. electric current or vibration, is measured or determined versus time, is converted into the frequency domain so that a frequency spectrum of the measurement signal/sampled signal is generated. The conversion is a known operation and, e.g., the Fast Fourier Transform (FFT) can be used as one of the available conversion operations.

JP2015-021901 describes a diagnostic device for a rotating machine, which may also be named rotary machine, that assumes a setting in which a peak in a frequency spectrum of an undersampled measurement signal is corrected based on band pass sampling approach and the use of necessary information available in advance to the correction. Further, in this prior art it is assumed that only a single operating condition is used, e.g. that the motor to be diagnosed runs at a constant speed or the like.

JP HO9 166483 A describes that an acoustic signal which is generated by an object to be monitored is detected by a sound detection part, and the detected acoustic signal is 1/3-octave-analyzed by a monitored-sound frequency analysis part. A frequency-spectrum subtraction part subtracts a normal-state 1/3 octave pattern from the 1/3-octave pattern of a monitored sound, and the output of the subtraction part becomes the analytical pattern of only an abnormal sound or a disturbance sound. The pattern of only the abnormal sound or the disturbance sound and every pattern, which is stored in a disturbance sound-frequency spectrum storage part in advance, are collated by a similarity computing part. A sound monitoring part to which a collated result is input removes the disturbance sound or judges the existence of an abnormal sound on the basis of the collated result.

However, the above discussed prior art does not consider that a frequency spectrum may include many "real" frequency peaks, e.g. if the machine/component to be diagnosed does operate under varying operating conditions, such as varying rotational speeds. The necessity under the prior art approach to provide detailed pre-information for performing the correction reduces the general usability and a differentiation between closely arranged frequency peaks or frequency components is not possible/is difficult, too.

Hence, it would be desirable to have an improved diagnosis device at hand which enables to use undersampled signals for an accurate diagnosis of a rotating machine. Improvement shall in particular relate to traversal of the above discussed points of the prior art.

### Problem and Solution

It is an object of the herein described disclosure to provide a solution to the problem of enabling an accurate diagnosis of a rotating machine without requiring complex hardware. This is solved by the subject-matter of the appended claims. In particular, it is a technical advantage that undersampled measurement signals can be used because this reduces, inter alia, the hardware requirements/complexity of the diagnosis device without reducing the diagnosis accuracy. The processing does not require detailed pre-information which further reduces complexity in a technically beneficial manner.

The following aspects are provided in particular: A diagnostic device for analyzing measurement signals of a rotating machine, based on which a state diagnosis of the rotating machine may be carried out. The rotating machine itself may be the object to be diagnosed or a component thereof. The rotating machine may be installed or placed within another device, such as a vehicle or any other industrial machine.

The diagnostic device may comprise different units which may be configured by hardware, such as a processor, a memory and/or the like, and/by software, e.g. the units may be part of a computer program product. The units described in the following may be configured to be provided separately, i.e. as stand-alone unit, or they may be sub-parts of a single unit. Further, some units may be provided in a combined or separated manner compared to the description below, e.g. the input units may also be a single unit instead of two separate units.

The diagnostic device includes at least one or more of the following units:
- A measurement signal input unit configured to receive at least two measurement signals. The measurement signals may be called first and second measurement signal or measurement signal A and B or the like. Further the measurement signals may also be called a signal, a (measurement) waveform, measurement data or the like. It is possible and envisaged that more than two measurement signals are input into the diagnostic device for a single diagnosis task and that the following procedures and configurations are adapted for the processing of more than two signals accordingly.
   The measurement signals include a set of measurement values of a first operational parameter of the rotating machine. The first operational parameter of the rotating machine may include electric current. The measurement input unit may be considered, preferably, as an input terminal which enables the diagnostic device to receive the measurement signals. The input may be provided automatically by other devices, such as sensors or storage devices connected by wire or wireless to the input unit. The measurement input unit may also be a hardware terminal, such as a USB port, or the like for receiving a storage medium that stores the measurement signals. If the diagnosis device is entirely configured by a computer program product running on a computer system, the measurement signal input unit may include any means which enables the computer system to receive wireless or by wire the measurement signals.
- A control parameter input unit configured to receive a second operational parameter of the rotating machine for each of the received measurement signals. The possible and/or preferred alternatives and configurations described in connection with the measurement signal input unit also apply to the control parameter input unit in analogy.
- An analyzing unit.

The analyzing unit is configured to determine the frequency spectra of the at least two measurement signals by converting the at least two measurement signals into the frequency domain. For this conversion any suitable transform can be applied and a preferred example is the Fast Fourier Transform.

The analyzing unit is further configured to determine a relation parameter (or ratio parameter) based on the values of the received second operational parameters. For example, if the second operational parameter indicates the rotational speed of the rotating machine during the measuring of the corresponding measurement signal, the relation parameter may be determined by dividing the value of the second operational parameter of the first measurement signal by the value of the second operational parameter of the second measurement signal or vice versa. In case of more than two measurement signals, e.g., more than one ratio or relation parameter values may be determined analogously.

The analyzing unit is further configured to generate a post-processed frequency spectrum for each frequency spectrum by performing a frequency component multiplying process for one or more or for each frequency component in the frequency spectra. With each input/received measurement signal converted into the frequency domain, i.e. into the (frequency) spectrum, the converted measurement signal will include a plurality of frequency components, wherein the term "frequency component" of the frequency spectrum shall indicate the amplitude value at a discrete frequency value. For example, if the measurement signal transformed to the frequency domain will cover a range from 0 Hz to 100 Hz, each of the frequency values between (including the edges) 0 Hz and 100 Hz will exhibit a related amplitude value (y-axis value if the frequency is on the x-axis) which may take any value which may also be zero. Hence, if the first operational parameter is an electric current, the amplitude value at a specific frequency component will be the value of the electric current in Ampere at said frequency value.

It is possible that the frequency spectra will be displayed to the user by a display unit and that the user marks/selects all frequency components or just a subgroup of the frequency components for the further processing. Alternatively, or additionally, the analyzing unit or another unit of the diagnostic device or a remote computer system will perform the task of selecting one or more or all frequency components of the spectra for further processing. Very preferably, a machine learning logic (ML) or an artificial intelligence (Al) are trained for the task beforehand and the trained ML/Al can perform the above task.

Furthermore, alternatively or additionally to the above, the frequency components are selected based on a predefined regime which most preferably makes us of a (pre-)set step distance, which has a frequency value. For example, the step distance may be set by a user, an Al/ML or it may be prestored/preset in a memory. Based on said step distance frequency components may be selected, wherein a frequency component may be selected if it equals a multiple of the step distance, which is given in Hertz. Preferably, the first frequency component that may be selected is the edge of the frequency range covered by the measurement signal in the frequency domain. For example, if the step distance is preset to be 0.1 Hz and if the spectrum would start at 0 Hz, every amplitude value at 0 Hz, 0.1 Hz, 0.2 Hz and so on would be selected. If the step distance has a different value than 0.1 Hz in the above example, the selection would proceed analogously. An upper value for the frequency components to be selected may be (pre-)set.

The frequency component multiplying preferably generates additional frequency components in the frequency spectra which are located at frequency values which are multiples of the frequency component that has been multiplied in the frequency component multiplying process. The number of multiples or multiplied frequency components can be limited by a preset value.

Furthermore, it is noted the term "peak" or "frequency peak" as referred herein shall preferably relate to a single amplitude value at a local or global maximum or to a distribution of amplitude values around a local or global maximum.

The analyzing unit is further configured to compare frequency components of the frequency spectra of the at least two measurements signals with each other. This shall preferably include, for example, that one frequency component from one of the post-processed frequency spectra is selected and its amplitude value is then compared to an amplitude value of another post-processed frequency spectrum of the post-processed frequency spectra. In case of, e.g., two measurements signals and hence two post-processed frequency spectra, this would mean that an amplitude value at a selected frequency value of the first post-processed frequency spectrum is compared to an amplitude value of a frequency value of the second post-processed frequency spectrum. If there are more than two measurement signals, preferably, the number of frequency values which are compared with each other (i.e. their amplitude values) is identical to the number of measurement signals or frequency spectra.

Furthermore, based on the results of the comparison the analyzing unit is further configured to determine and/or to generate a corrected frequency spectrum. The correction, in particular, includes the suppression or deletion of "false" frequency peaks or "false" frequency components which are stemming from noise or any other sampling or signal post-processing artefacts, especially aliases. In other words, the corrected frequency spectrum includes preferably only or at least mostly "real" peaks or frequency components; put differently, the corrected frequency spectrum includes no "false" peaks or frequency components or, at least, "false" peaks or frequency components are suppressed or reduced in view of their amplitude.

The above allows to improve the diagnosis of a rotating machine because the corrected spectrum can be used for a highly accurate diagnosis of the state of the rotating machine while, as a data source, measurement signals are usable which are sampled at a low sampling rate (low-speed sampling) which saves computing resources especially in view of storage space and computational burden. The analyzing unit itself also requires less computational power than other likewise units because of the neat processing scheme of the measurement data, which, in particular, does not require complex mathematical operations or the like or extensive pre-information. Moreover, a signal filter for filtering the measurement signals is also not necessary.

The comparison of the frequency components is carried out as follows: a first frequency component of one frequency spectrum (instead of the term "first" another term may be used, e.g., frequency component "A" or the like; i.e. the term "first" shall preferably support differentiating the frequency component from another one so that the following can be understood better) with a second frequency component of another frequency spectrum (with regard to the term "second" the comment as to the term "first" applies, too) of the at least two measurement signals.

Very preferably, the second frequency component of the other frequency spectrum is identified by using the formula: fa x relation parameter, wherein fa is the frequency value of the first frequency component. The relation parameter, e.g., may be the ratio of the rotational speeds which were used during the measurement of the two different measurement signals. In other words, the second frequency component may be selected or picked for the so-called "comparison" so that its frequency value matches the frequency value of the first frequency component multiplied with the relation parameter.

Further, the corrected frequency spectrum is determined by multiplying the amplitude value of the first frequency component with the amplitude value of the second frequency component and using the square root value of the result of the multiplication as the amplitude value of the frequency component of the corrected frequency spectrum. In other words, the comparison of two frequency components from two different measurement signals (their spectra) may preferably include selecting the frequency components to be compared as described above and then multiplying their amplitude values with each other. The correction may then include the newly determined amplitude value for generating the corrected frequency spectrum.

If more than two amplitude values are multiplied with each other, e.g., if there are more than two measurement signals or frequency spectra, the third root or the n-th root of the multiplication result may be used as the amplitude value of the corrected frequency spectrum.

The comparison and correction steps may be performed for all frequency components that have been selected for the further processing, i.e. and especially for the comparison and the correction. The frequency components shall also include the multiplied frequency components, i.e. these which have been generated by the frequency components multiplying process.

With the above preferred configuration of the comparison and corrected frequency spectrum generation processes/steps, a mathematically relatively simple and computationally less burdensome option is provided which suppresses or deletes "false" frequency components or peaks, which may be the result of the undersampling, inherently due to these two steps. For example, in the most evident case, the amplitude value of the first frequency component has the value of "100" and the amplitude value of the second frequency component has the value of "0", the amplitude value at the first frequency value in the corrected frequency spectrum will be "0" and it would become clear that the amplitude/peak at the first frequency value was a "false" peak/frequency component, i.e. and e.g. an artefact of the undersampling, such as an alias. Even if the second amplitude value is not zero, the amplitude value of the corrected frequency spectrum will be changed compared to the post-processed frequency spectra.

Preferably, a corrected amplitude value which is below a preset threshold amplitude value is set to zero in the corrected frequency spectrum, i.e. the frequency component or the peak is deleted. The preset threshold may be an absolute preset value or it may be a relative value which, for example, may be defined by a difference between the amplitude value of the first and/or second frequency component and the corrected amplitude value as, e.g., a percentage value. Deleting the corrected amplitude values as described in the preferred aspect above, returns a corrected frequency spectrum which is even clearer because artefacts or false peaks are completely removed. This facilitates a further post-processing with which, e.g., the state of the rotatory machine may be determined based on the corrected frequency spectrum.

In the frequency component multiplying process, frequency components of the spectra are multiplied in said frequency component multiplying process which have a frequency value that matches a preset step distance multiplied by a factor. The step distance has a value which is identical with the frequency resolution of the measurement signals. The factor is a vector and includes a series of factor values, which are integers. The series of factor may be formed as follows: 0, 1, 2, 3, ..., N. The value "N" may be preset as an upper limit which may be predefined or which may be set by a user for each case.

According to the invention the step distance is identical with the frequency resolution of each measurement signal. The frequency resolution shall preferably mean the inverse of the data length. The data length may be the time period of the measurement signal or the time length of a window selected from the measurement signal. For example, the measurement signal may have a data length of 10s, 100s, 10min, 2 hours or any other duration (time length). If a window is selected it may be a sub-period of the entire data length. Further, as an example, if the data length is 10 s, the frequency resolution is 0.1 Hz and hence the step distance is 0.1 Hz which would mean, in this non-limiting example of the step distance because any other value is also possible, that every frequency component at 0 Hz (if the spectrum starts at 0 Hz, otherwise the start value would be adapted accordingly), 0+0.1 Hz, 0+(0.1x2) Hz, ..., 0+(0.1xN) Hz would be selected as a "first frequency component" for the process of the comparison as preferably used and described further above. It is noted that not only the frequency components of the "original" frequency spectra may be selected, and preferably also the multiplied frequency components generated in the frequency component multiplying process are selected in accordance with the above regime using the step distance as a criterion for the selection.

Further preferably, with the step distance being identical to the frequency resolution, the data length of measurement signals may be adapted so that the values of the data lengths of the measurement signals corresponds to the relation parameter. This shall, for example, mean that if the relation parameter is 1/3, the data length of the second measurement signal (if there are two measurement signals) may be chosen to be 1/3 of the data length of the first measurement signal. This can, for example, be done by adapting the measuring time or by using a window (function) for, e.g., the second measurement signal.

With the above, it is ensured that false peaks/frequency components can be identified even more reliably and the step distance based selection regime of frequency components can be carried out with low computational burden.

In a further preferred aspect, each, i.e. every, frequency component of a post-processed frequency spectrum may be compared to each, i.e. every, frequency component of another post-processed frequency spectrum. That may mean that in this alternative all frequency components and their multiplied frequency components which have been generated in the frequency component multiplication process are compared to all frequency components and their multiplied frequency components which have been generated in the frequency component multiplication process of the other measurement signal. This delivers a very accurate results however increases the computational burden compared to the preferred alternative which compares only selected, i.e. some, i.e. not every, frequency components (or their multiplied frequency components) with selected or corresponding frequency components (or their multiplied frequency components) of another measurement signal/spectrum. This alternative saves computational resources and still delivers very accurate results in terms of the corrected frequency spectrum. The corresponding frequency component may be found by the above explained equation according to which the frequency value of the first frequency component is multiplied by the relation parameter to calculate the frequency value of the second frequency component.

The diagnostic device also comprises an output unit configured to output at least one corrected frequency spectrum to a state diagnosis unit which is configured to diagnose the corrected frequency spectrum for determining a state of the rotating machine. The state of the rotating machine or a part/component thereof may include healthy or normal, i.e. a fully functional and unbroken state, maintenance required, e.g. when some components or the entire machine shows signs of wear or the like, or broken or damaged or dysfunctional, e.g. when a component or the entire machine has a damage. The height/amplitude of a frequency peak indicating an error or damage may be an indicator for the severity of the damage.

Hence, a less computationally expensive diagnosis can be provided which is highly accurate because it can make use of the corrected spectrum which was computed/determined with the above discussed technical advantages.

In a further preferred aspect, the state diagnosis unit may compare the entire corrected frequency spectrum or a window of the corrected frequency spectrum of the rotating machine with a reference frequency spectrum of the rotating machine, wherein the reference frequency spectrum of the rotating machine represents a healthy state of the rotating machine or of a component of the rotating machine. The comparison may for example identify additional peaks in the spectrum which are indicators for a damage or wear. Further, if only a certain range of the frequency spectrum is of interest or is known to be especially critical or the like, a window may be used to cut out said range for comparing it with a corresponding part of the reference spectrum. This may further reduces computational burden of the diagnosis.

In a further aspect, the diagnostic device may sample the measurement signals with a sampling rate below the Nyquist criterion. This may be done by any unit of the diagnostic device. The Nyquist criterion shall indicate the condition for a non-destructive sampling which is a sampling rate above twice the band limit value. Alternatively, or additionally, the diagnostic device may receive the measurement signals at the measurement signal input unit already (pre-)sampled with a sampling rate below the Nyquist criterion together. At the same time the value of the sampling rate used for the sampling is submitted in the latter case. The present disclosure allows to use and preferably uses low-speed sampled measurement signals, i.e. sampled below the Nyquist rate, in order to purposely reduce the storage space and computational power needed for the analyzing and diagnosis. This allows monitoring rotating machines over long periods of operation or other technically beneficial application scenarios.

In a further preferred aspect, the measurement signals may be received in the time domain from a storage unit and/or from a measurement unit, such as a sensor. Hence various sources can be used and they can also be flexibly changed providing high degree of freedom in view of application scenarios and available hardware or software sources.

According to the invention, a second operational parameter is input for each measurement signal and the second operational parameter is the rotating speed of the rotating machine or of a component thereof. The rotating speed may be measured by a sensor, such as a rotational speed sensor installed at the machine. The value of the second operational parameter belonging to a measurement signal is preferably fixed/constant. For example, the measurement signal may be measured during an operational period of a constant rotational speed. The timing for the measurement may either be such that the measurement is taken when it is detected that the rotational speed is constant or the rotating machine is driven for the necessary time period at the constant rotational speed for taking the measurement. The rotational speed measured by a sensor is a precise yet simply measured parameter which further underpins the computational inexpensive approach proposed herein.

The second operational parameter is the control command value of the rotating speed or a measured value of the rotating speed. The latter alternative of using a measured value thereof was already discussed above. The firstly mentioned alternative relates to an even less complex solution because the rotational sensor may not be needed. Instead, the input command values of the rotating machine, such as input by a controller or the like to the rotating machine, may be provided by the controller or the like to the diagnosis device and based the respective values are assumed as the rotating speed of the rotating machine.

In a further preferred aspect, the second operational parameter may be a travelling speed of a vehicle on or within which the rotating machine is installed. More preferably, the travelling speed information may be used to calculate or estimate the rotating speed of the rotating machine. For example, if the vehicle is a train or a car, a relation between the rotating speed of the electric motor thereof and the travelling speed of the vehicle may be known or stored and used for estimating or calculating the rotating speed of the rotating machine. This is solution is also less complex because the information about the travelling speed of the vehicle is usually known and no further measurement devices need to be provided.

In a further preferred aspect, the values of the measurement signal in the time domain (i.e. the values plotted on the y-axis if time is plotted on the x-axis) are the electrical current or the rotation angle of the rotating machine. In other words, the measurement signal includes electrical current or the rotating angle versus the measurement time. These values allow a precise state diagnosis of the rotating machine.

In a further preferred aspect, a characteristic frequency is analyzed as selected frequency especially in a scenario in which only a specific part of the frequency spectrum and a specific component of the machine to be diagnosed shall be diagnosed. For example, if the rotating machine is a motor and a gear it may be known in advance that the gear has a much higher characteristic/operating frequency than the motor so that the frequency peaks of the two components of the machine are well separated in the spectrum. In such a case, it may be a further option for reducing the computational burden to select only the peak of the motor in the frequency spectrum and possible damage-indicating peaks related to a damage to the motor or, alternatively, to remove the gear related peaks from the spectrum or from the further analyzing process.

In a further preferred aspect, the frequency component multiplying process includes the steps of shifting a copy of a frequency component in the frequency spectrum by the value of the sampling rate times an integer value which takes values between 1 and a predetermined upper integer value which may be limited or may be infinite. That means each peak or frequency component may be shifted by all or a selected range of integer multiples of the sampling rate in the frequency component multiplying process. They are newly created/generated (multiplied) frequency components as explained before. Instead of integer value also other values can be used. Again, the present disclosure provides a relatively computational low-cost yet effective process, with which aliases can be identified reliably and removal or suppression of them is enabled so that a very accurate corrected spectrum can be generated based on which a reliable and accurate state diagnosis can be performed.

In a further preferred aspect, the analyzing unit and/or the state diagnosis unit includes one or more trained machine learning units and/or trained artificial intelligence units in particular configured for performing the frequency component multiplying process, the comparison of the frequency components and/or the generation of the corrected frequency spectrum, in case of the analyzing unit, and to perform the comparison of the reference frequency spectrum with the corrected frequency spectrum, in case of the state diagnosis unit. Using a diagnosis device internal or external trained ML/Al provides reliable, fast and precise processing of the above-mentioned processes/tasks without interaction of a human user. Alternatively, conventional computational programs can be provided to calculate or perform the above processes.

In a further preferred aspect, the rotating machine is a machine or a component thereof selected from the following non-exhaustive list of: generator of a wind turbine, motor of a vehicle, motor of a car, motor of a train, motor of an elevator, motor of any other industrial apparatus, a gear, a compressor, a turbine. Other rotating machines may be used as well even not explicitly mentioned here.

According to the invention there is also provided a computer-implemented diagnostic method which may carry out the steps performed by one or more of the units of the diagnostic device explained above and a computer program product having computer program logic arranged to put into effect said method, when being executed by a computer.

### Brief Description of Drawings

- Fig. 1: shows in Figs. 1(a)-(d) a comparison of the frequency spectra of a measurement signal sampled in accordance with the Nyquist criterion ("high-speed sampled") and an undersampled measurement signal.
- Fig. 2: shows in Figs. 2(a)-(b) a method applied in the prior art for correcting a frequency spectrum of an undersampled measurement signal based on band pass sampling and pre-information, and Figs. 2(c)-(d) show a comparison of frequency spectra of a high-speed sampled and an undersampled measurement signal with multiple frequency peaks.
- Fig. 3: shows in Figs. 3(a)-(c) a herein proposed principle for correcting undersampling-based frequency spectra.
- Fig. 4: shows in Figs. 4(a)-(b) a part of the herein proposed approach for correcting undersampling-based frequency spectra.
- Fig. 5: shows in Figs. 5(a)-(d) another schematic of a part of the herein proposed approach for correcting undersampling-based frequency spectra.
- Fig. 6: shows in Figs. 6(a)-(b) an application example of the herein proposed approach.
- Fig. 7: shows in Figs. 7(a)-(d) another application example wherein Fig. 7(c) shows the result of the method in accordance with the prior art while Fig. 7(d) shows the result of the present disclosure.
- Fig. 8: shows a schematic of a diagnostic device as described herein.
- Fig. 9: shows a possible technical implementation of a diagnostic device as described herein.
- Fig. 10: shows a flow of data/signals in accordance with a herein described diagnosis device.

### Detailed Description of Exemplary Aspects

In the following, preferred aspects and examples will be described in more detail with reference to the accompanying figures. Same or similar features in different drawings and examples are referred to by similar reference numerals. It is to be understood that the detailed description below relating to various preferred aspects and preferred examples are not to be meant as limiting the scope of the present disclosure.

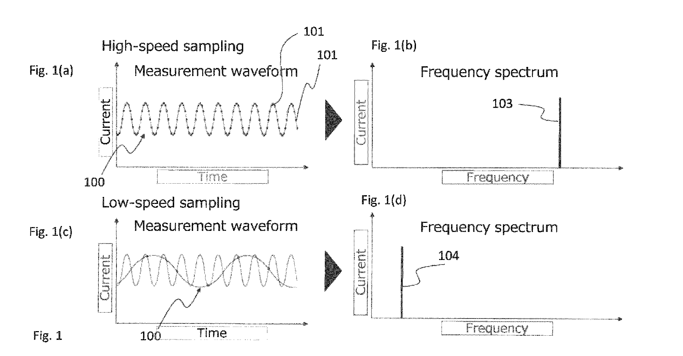

Figure 1 shows in Fig. 1(a) a schematic of a waveform being a measurement signal 100 in the time domain which means that the x axis represents time. The y axis, in this non-limiting example, plots the electrical current of a rotating machine or a component thereof. In this non-limiting example, the component may be the motor 1000 of an industrial machine, such as a motor of an automotive vehicle, a train or rolling stock, an elevator or the like. The electrical current may be measured by a current sensor 1001 or may be the determined from the current command value input by a control unit 1001, e.g., to the inverter 1003 of the motor or the like. The sampling of the measurement signal 100 is indicated by the small black dots which show the sampled measurement values 101. In Fig. 1(a) the Shannon-Nyquist criterion for the sampling of a baseband signal which shall be correctly reproducible is fulfilled. Such kind of sampling will also be called "high-speed sampling" in the following and contrary to "low-speed sampling" or "undersampling" which refers to sampling with a rate that does not fulfill the Nyquist criterion (as shown in Fig. 1(c)).

The sampled signal of Fig. 1(a) in the frequency domain, i.e. the frequency spectrum or spectrum, is shown by Fig. 1(b) and a frequency peak 103 can be seen indicating, e.g., an operational condition of the rotating machine, e.g. the rotating speed of the motor 1001.

Further, as noted above, an undersampling of the same measurement signal 100 is schematically shown by Fig. 1(c) which returns a frequency spectrum, see Fig. 1(d), which includes a frequency peak at a lower frequency than the spectrum of Fig. 1(b) caused by the undersampling. The frequency peak of Fig. 1(d) may also be called an alias 104.

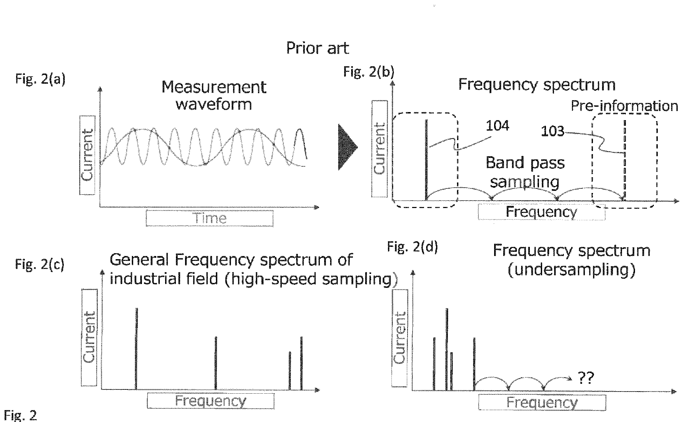

Figs. 2(a) and 2(b) show a prior art iterative technique which uses pre-information about the sampling conditions, about the high-speed sampling spectrum, i.e. the expected or correct spectrum, and a band pass sampling process so that the correct frequency peak in the spectrum can be estimated. In other words, the alias 104 as shown in Fig. 2(b) is corrected and the "real" peak 103 is restored by this technique.

Fig. 2(c) shows, however, an exemplary situation in which the frequency spectrum of the measurement signal includes more than a single peak, e.g., due to defects of the rotating machine, variable operation speeds, or the like and Fig. 2(d) shows a frequency spectrum of an undersampled measurement signal in which peaks are located close to each other which renders identification of a peak difficult. This is indicated by the question marks in Fig. 2(d). In both scenarios of Figs. 2(c) and (d) the present disclosure can provide accurate corrected frequency spectra and the use of extensive/detailed pre-information is not needed either which also holds for signal filters.

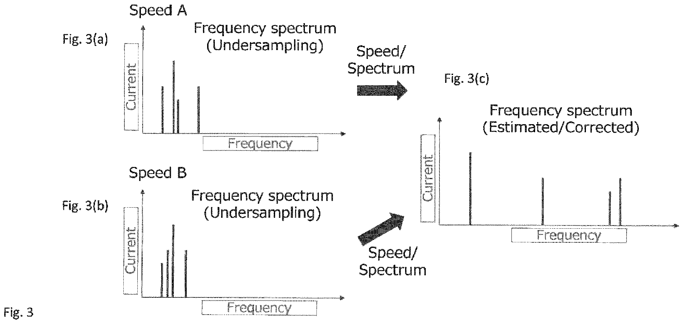

Fig. 3 with subsections (a) to (c) shows a basic working principle of the herein proposed improved diagnostic device 200. Specifically, in the diagnostic device 200 at least two sets of input data are received which shall in particular mean that two measurement signals or sampled (with low-speed) signals thereof are received wherein the measurement signals/sampled signals were measured at different operational conditions of the rotating machine. The operational conditions include, for example, the (rotating) speed of the rotating machine and may be derived from other parameters such as the moving speed of the vehicle, if the rotating machine is part of a vehicle or the like. The rotating speed may also be determined by a sensor or by the input command values relating to the rotating speed from a controller of the rotating machine. This is depicted by the schematic spectra of Figs. 3(a) and (b) which each show a spectrum of the same rotating machine or component thereof which was run with speed "A" in the case of Fig. 3(a) and with speed "B", with "A" unequal to "B". The original time-domain measurement signals of the spectra are not shown here, however a schematic example is shown by Fig. 2(a).

Based on the information that a "real" peak or frequency component, i.e. a peak or a frequency component which would also be present in a high-speed sampled spectrum, is dependent on the operation condition of the rotating machine, a ratio parameter or relation parameter can be used to correct/estimate the high-speed sampled spectrum which will be described in more detail below.

Fig. 3(c) shows the corrected spectrum with "real" peaks or frequency components, which especially shall mean that aliases were suppressed or removed from the spectrum of the undersampled signals, so that the expected spectrum, as if a high-speed sampling was used, can be estimated. The estimated spectrum shall also be called "corrected" (frequency) spectrum.

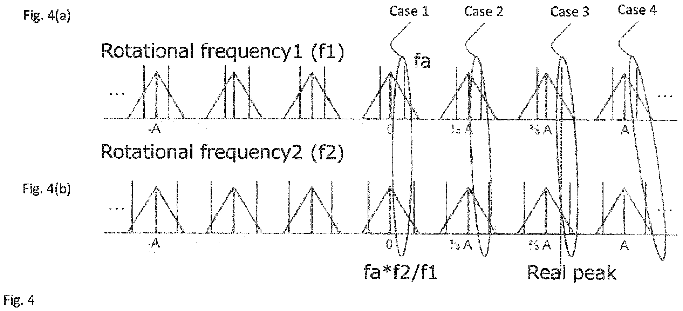

Fig. 4 with Figs. 4(a) and (b) shows a principle of band pass sampling performed with two undersampled signals, such as the signals of Figs. 3(a) and (b). Both sub-Figs. of Fig. 4 show peaks/frequency components in the spectra and it can be discerned, due to the different operating conditions, that the peaks are relatively shifted to each other. The peaks in Figs. 4(a) and 4(b) are the (thin) vertical unbroken lines wherein the x-axis plots the frequency with 0 Hz located approximately in the middle of the two sub-Figs. 4(a) and (b). The y-axis or vertical axis plots the amplitude value of the peaks, e.g. electrical current. However, only a real peak or frequency component is shifted with a ratio of their frequency values which match with the relation parameter that is defined herein as the ratio of the operating speeds underlying the measurement signals, such as speeds "A" and "B" of Fig. 3.

By way of example, the schematic of Fig. 4 shows frequency components (including multiplied frequency components) and one of them matches the condition explained above so that it can be determined/identified as a real frequency component as noted in the Figure.

In other words, Figure 4 shows the signal and its folded components (Folds or "multiplied frequency components"). If the rotational frequency is different, (torque) electrical current recorded by controller, such as a programmable logic controller PLC, is proportional to the rotational frequency or rotating speed of the rotating machine. Therefore, if the signal is located at the same position, the peak is noise or aliasing of the higher frequency component. By checking the proportional relationship / non-proportional relationship, real frequency components can be detected. The comparison may be done by multiplying each amplitude value of a frequency component/peak with an amplitude value of a corresponding frequency component in the other frequency spectrum recorded at a different rotational speed. Then, the square root of the multiplication result can be used as a value for the corrected frequency spectrum and this value may be larger than zero or may not deviate more than predefined margin/difference from the calculated compared amplitude values. In the above, the frequency interval or step distance between the frequency components which are compared with frequency components of the other measurement signal/frequency spectrum should be proportional to the rotational speed by adjusting the data length of the measurement signals.

In even other words, Fig. 4 shows for the "comparison" of case 1, as indicated in the Figure by an oval line drawn around the upper peak having the frequency value of "fa", that there is no peak or significant amplitude value present at the corresponding frequency value of the other spectrum (of Fig. 4(b)), wherein "corresponding" shall indicate the frequency component which matches the result of the value fa with the relation parameter, the latter being indicated as the ratio of f2/f1 in Fig. 4(b). As a result, the comparison returns, due to the multiplication of the low or zero-amplitude value of the corresponding frequency component of Fig. 4(b) that the peak or the frequency component at the value fa in the spectrum of Fig. 4(a) is an alias or any other artefact, i.e. a "false" peak or frequency spectrum. The same holds for cases 2 and 4 of Fig. 4 which also show that the peaks or frequency components present in the spectrum of Fig. 4(b) are not located at a "corresponding" frequency value so that the comparison or multiplication would return a "real" peak or frequency component as the result of the comparison. However, in case 3 the oval line around the two peaks of both spectra of Fig. 4 shall indicate that there is a frequency component or peak at the corresponding frequency position so that the multiplication and the taking of the square root will return a value that indicates that the frequency components/peaks are not negligible, i.e. that they are real. If the "comparison" procedure of Fig. 4 as schematically explained above is carried out for each frequency component of the spectra or at least for each selected frequency component, a corrected frequency spectrum can be generated by using only the square root values of the multiplication of corresponding frequency components of the spectra.

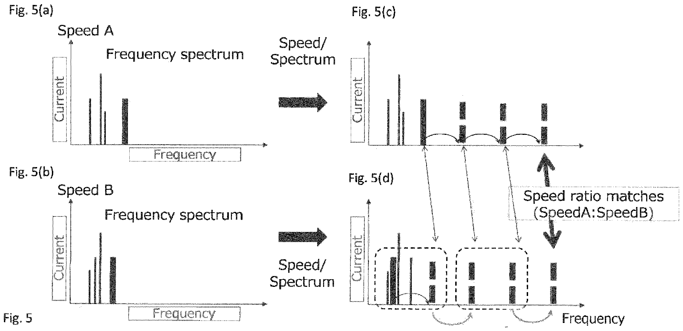

Fig. 5 including sub-Figs. (a) to (d) shows a proposed procedure of performing the multiplying of the peak/frequency component of each spectrum of an undersampled measurement signal measured at different operation conditions, such as speeds "A" and "B" , and a subsequent comparison thereof (wherein the frequency component multiplying process is performed with an integer value preferably) with each other for the two different spectra of speeds "A" and "B", as shown by Figs. 5(c) and (d). Those peaks or frequency components which fulfill the requirement of having the same relationship to each other as the speed ratio of "A" and "B", i.e. A/B or B/A, may be identified as real peaks or frequency components and may be used for the corrected spectrum. By way of example, the thicker/bolder peaks of the frequency spectra of Figs. 5(a) and (b) are used to show the frequency component multiplying process in the Figs. 5(c) and (d). The broken lines in the latter Figures indicate shifted/copied/multiplied frequency components which are then compared (indicated by the double-arrows between the diagrams of Figs. 5(c) and (d)) with other or corresponding peaks of the other spectrum to determine whether they are real peaks or frequency components. In the schematic example of Figs. 5(c) and (d) each last peak (i.e. the peak with the highest value in this example) matches with the relation parameter which is indicated by the bold double-arrow. This is then found to be a real peak or frequency component. Further, the thin, bent arrows between the copied peaks or frequency components indicate the frequency component multiplying process, for which preferably an integer times the sampling frequency is used.

In other words, if two frequency components of two different frequency spectra that a recorded with rotational speeds A and B in the example of Figure 5 are compared with each other, the comparison is or at least includes, preferably, a multiplication of the amplitude values of the compared frequency components. The frequency components which are compared with each other may not have the same frequency value. Rather, if a first frequency component is selected for the comparison from one frequency spectrum, the corresponding frequency component of another frequency spectrum would be chosen to have the frequency value of the first frequency component multiplied by the relation parameter, i.e. speed A divided by B in the example of Figure 5. In other words, a step difference in Hertz for choosing frequency components from the two frequency spectra of Figure 5 (more than two are possible) is different for each frequency spectrum. Preferably, the step difference is a value which is calculated from the reciprocal value of the length of the data or the measurement signal or a window therefrom in units of time and the ratio of the lengths (or data length) of the measurement signals is chosen/set to be identical or proportional to the relation parameter. The multiplication of the amplitude values in the comparison process of the frequency components returns a corrected value which may be zero, which may be lower or higher than a threshold or which may be comparable to the amplitude values which have been multiplied with each other. The latter case would, e.g., mean that a real peak or frequency component has been detected and the amplitude value thereof would be present in the corrected frequency spectrum which preferably includes all corrected values of all comparisons of frequency components.

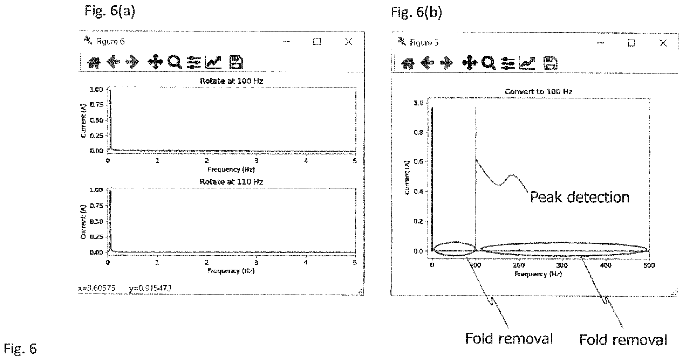

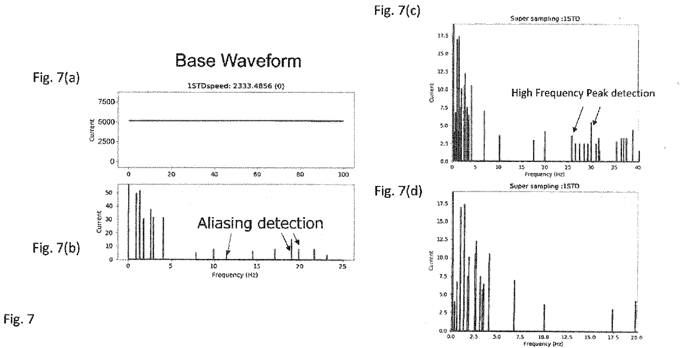

Figs. 6 and 7 show examples of the herein proposed correction processing of an analysis unit 203 of the diagnostic device 200 by way of an exemplary simulation. Especially, Fig. 6(a) shows a spectrum of an example measurement signal in the upper window which was taken at a rotating speed of the rotating machine of 100 Hz while the measurement signal underlying the spectrum in the lower window was taken at 110 Hz. Both measurement signals were sampled with 10 Hz. According to the sampling theory, 5 Hz is the frequency range and a signal near 0 Hz (and near -0 Hz or 10 Hz) can be observed. Based on the data, 0 to 500Hz is predicted by band pass sampling, which in this disclosure preferably means multiplication of the frequency peak with a fixed factor which preferably may be an integer value times the sampling rate, and a peak at 100Hz is detected without aliasing; Fig. 6(b) shows the detected real frequency peak at 100 Hz while peaks at 200 Hz, 300 Hz and the like are identified as aliases to be deleted (marked as "fold removal" in the Figure). More specifically, the aliases are suppressed due to the multiplication-based comparison as described in view of Figures 4 and 5 above.

Fig. 7 shows in sub Figures (a) to (d) a comparison of the prior art result (Fig. 7(c)) with the result achieved by the herein described approach (Fig. 7(d)). One can see that the time domain measurement signal of Fig. 7(a) (which is shown in a current range from 0 to 7500 Ampere so that the curve appears to be a flat line which is however not true and this appears only due to the broad current range) is transformed into the frequency domain and the respective spectrum, see Fig. 7(b), includes a plurality of frequency components/peaks some of which being aliases (see arrow markers) which are only created by the undersampling of the measurement signal. The aliases or otherwise non-real components/peaks can however successfully be suppressed and the corrected spectrum generated by the herein described approach, as shown by Fig. 7(d), does not include such "false" peaks/frequency components. The result of the prior art as shown by Fig. 7(c) includes further high frequency peaks which are not shown by the graph in Fig. 7(d) according to the herein described approach.

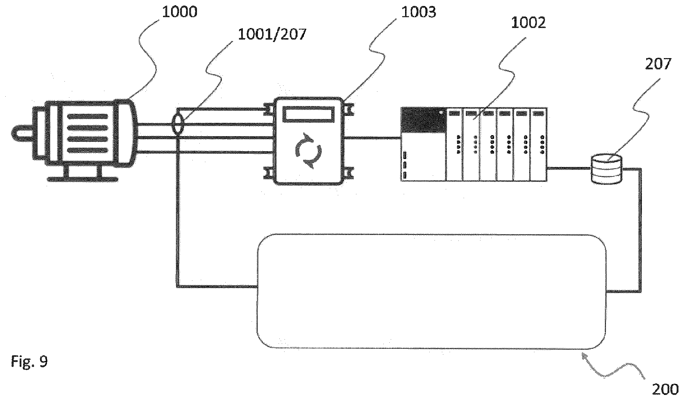

The inventors of this disclosure also report that the present matter was tested with a railway rolling stock and an iron transportation system and that the corrected spectra were useful for, e.g., predictive diagnosis of the machines. For the diagnosis of the railway rolling stock, a two-phase electrical current was measured and converted to torque current with a conventionally known method. Further, the speed of the trains was used for the operation condition data based on which the relation parameter could be determined. For the iron transportation system, electrical current data in a controller, such as the PLC 1002 shown in Fig. 9, was used, i.e. no measurement data of the current but the command values were used for the measurement signals. Transportation speed data was used as operation condition data. The corrected spectra could be used for a reliable diagnosis of the state of the machines, and, in both cases, the electrical current component was shown to be increased as the degradation of the component progresses. In these examples, the target to be diagnosed were, e.g., the motor bearing and/or mechanically connected components such as the gear.

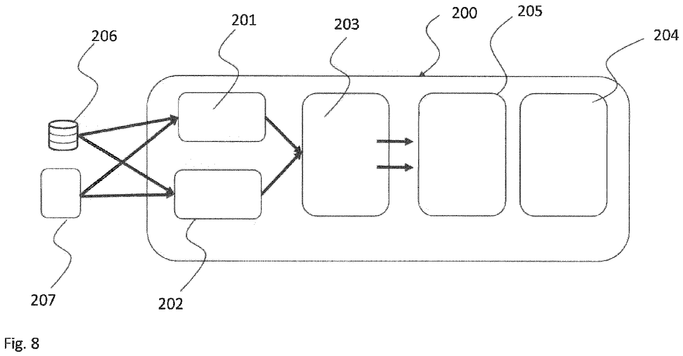

Fig. 8 shows an example of a diagnostic device 200 which is assembled/arranged in accordance with aspect(s) of the present disclosure which is preferred. The diagnostic device 200 may include units and sub-units which may be constituted by hardware and/or software. In case of hardware, e.g., the units may include computing units, such as processors, asics, or the like which process a program that may be stored in an internal memory (not shown) or may be loaded from an external source (not shown). The entire device 200 may also be set up entirely or partially as a software program product wherein the units as shown in Figure 8 may be sub-units of the program product. The distribution of units may also be different, for example, the two different input units which are described below may also be a single unit or may be divided into more than two units. The same holds true for the other units.

The input data provided to the diagnostic device 200 are preferably provided from one or more sensor units 207 and/or a storage unit 206 and includes time-based (in the time domain) measurement data of an object to be diagnosed. Said object is a rotating machine or a component/part thereof. According to the invention, the measurement data includes rotary speed, and it may include electrical current or the like which is measured over time. More preferably, in case of an electric motor, the input data may include measurement values of the electrical current (torque) of the electrical motor measured by a current sensor or originating from electrical current control command values input into the electrical motor. The rotary speed may also be measured or read out from control command values. The input data may be data which was measured by one or more sensor units 207, which are control command values provided to the rotating machine or which may have been measured and stored in the storage unit 206 before it is (later) used for the diagnosis. In addition to the measurement data/control command data, the input data provided to the input units 201/202 of the diagnostic device 200 include control parameter data such as speed data and preferably also information about the sampling rate with which the measurement signal was sampled. The speed data may include a running speed of the vehicle in which the rotating machine is installed from which the rotating speed of the rotating machine can be derived and/or it may include the rotating speed of the rotating machine itself, e.g. measured by a sensor.

In the present example of Fig. 8 the input unit 201 is a measurement signal/data input unit 201 and the input unit 202 is a control parameter input unit 202. Input data received by the input unit(s) 201/202 is then forwarded to an analysis unit 203 in which the measurement signals received from the measurement signal input unit 201 are processed as described further below. Specifically, it is noted that the measurement signal input unit 201 receives at least two different sets of measurement data (measurement signals) which were taken at different operating conditions of the rotating machine which shall be diagnosed. The respective operating conditions are provided together with the input data which is received by the control parameter input unit 202. Hence, at least four sets of data are provided to the diagnosis device 200 for a diagnosis task.

In the analyzing unit 203 the process as already explained in connection with the previously described Figures is carried out which in particular includes the steps of:
- determining the frequency spectra of the at least two measurement signals by converting the at least two measurement signals into the frequency domain. This may be done, e.g., by carrying out a Fast Fourier Transform or any other suitable transform operation.
- determining a relation parameter based on the values of the received second operational parameters. The relation parameter is preferably the ratio between the values of the control parameters input to the respective control parameter input unit 202 and, e.g., in case of said being speed data of the rotating machine the ratio may be the result of dividing the speed value of the first measurement signal by the value of the second measurement signal or vice versa.
- generating a post-processed frequency spectrum for each frequency spectrum by performing multiplying of frequency components as described before. This step may include that the frequency components of the measurement signals in the frequency domain, i.e. the frequency spectra, are multiplied by a predetermined value and then each or some of the frequency components of the frequency spectrum of measurement signal A (or the first one) is/are compared to frequency components of the frequency spectrum of the measurement signal B (or the second one). The predetermined value may be a multiple (integer value or a non-integer value) of the sampling frequency which is preferably transmitted with the control parameter data. Thereby, "real" peaks or frequency components are identified while aliases or noise-related frequency components are suppressed as a result of multiplying the amplitude values of the frequency components as described above. In other words, a corrected frequency spectrum is determined by the comparison/multiplication step.

The corrected frequency spectrum can then be stored in a storage device (not shown) and/or they can be output by an output unit 204. The output can be provided to a display device (not shown) or to another processing unit which may perform any kind of postprocessing.

According to the invention the diagnosis unit 205 receives the corrected spectrum and diagnoses the state of the rotating machine. The state of the rotating machine may, e.g., include normal (free of defects), maintenance needed or broken/dysfunctional. The diagnosis unit 205 may use a reference spectrum for comparison with the corrected spectrum in order to determine the state. For example, the presence of additional frequency peaks compared to the reference spectrum, which may show the normal state, may indicate a defect. Such a comparison is a known process and may be performed by a human user or may be computerized, e.g., by way of a trained artificial intelligence or the like. The analysis unit 203 may also preferably include one or more trained artificial intelligences or computer subprogram products which are trained or programmed to perform the above steps.

Furthermore, preferably, the diagnostic device 200 may further include a window function unit or may select (computerized or by a human user) specific peaks to be corrected. The window function unit which is not shown may allow that only selected or predetermined frequency regions/ranges of the spectrum are further processed.

Fig. 9 shows an exemplary scenario for the application of the diagnostic device 200 which is connected by signal lines, which may be established wireless or by wired lines, to a sensor 1001 and a storage device 207. It is possible that the diagnostic device 200 is connected only to one of the storage device 207 and the sensor 1001. The rotary machine to be diagnosed, in this example, is an electric motor 1000 that is wired to an inverter 1003 which receives control command values and electrical current. The control command values may be provided by a control unit 1002 such as a programmable control circuit or the like. Instead of the diagnostic device 200 being a separate entity, it may also be part of/integrated into the control unit PLC 1002. Instead of the sensor 1001 which measures the electrical current of at least one of the phases of the motor, the control unit PLC 1002 may also provide the current command values issued to the motor 1000 as measurement signal(s) to the diagnostic device 200.

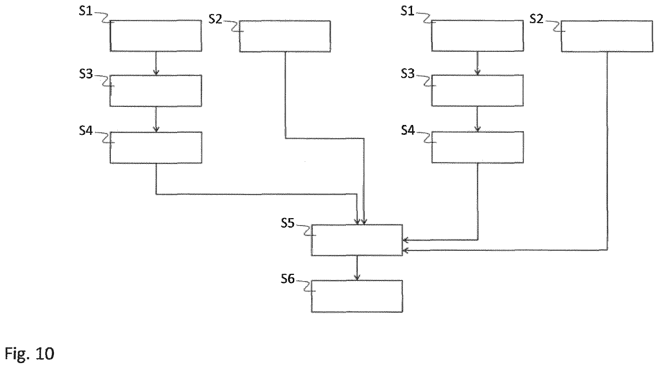

Fig. 10 shows a possible process flow in accordance with an aspect of the present disclosure. It can be seen that in the steps marked by S1 two analog signals are provided. Afterwards the sampling of the analog measurement signals is performed by an analog-digital converter (ADC) in step S3. The ADC may be part of the control unit PLC 1002 as shown in the example of Fig. 9, the diagnostic device 200 or a sampling may be performed before the measurement signal is input into the diagnostic device 200. Afterwards, the measurement signal(s) are converted into the frequency domain in step S4 and the analysis of the spectrum is performed in step S5 including the above-described sub-steps of generating the corrected spectrum/spectra. The correction in the analysis unit 203 is performed with the input of step S4 and the input of step S2 which include providing the control parameter values, i.e. preferably speed values corresponding to a specific measurement signal. The corrected frequency spectrum/spectra/data is then output or further processed as already described in step S6.

Summarizing, an improved diagnosis device, method and computer program product are provided which allow the use of undersampled signals and which do not require highly complex operation steps so that the hardware architecture of the device or on which the computer program product is operated does not have high system requirements.

As will be appreciated by one of skill in the art, the present disclosure, as described hereinabove and the accompanying figures, may be embodied as a method (e.g., a computer-implemented process or any other process), apparatus (including a device, machine, system, computer program product, and/or any other apparatus), or a combination of the foregoing.

Aspects/Examples of the present disclosure may be a software entirely (including firmware, resident software, micro-code, etc.), or a combination of software and hardware aspects that may be referred to as a "system". Furthermore, the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

The present disclosure may be described with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

The computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment of the disclosure.

It should be noted that terms such as "server" and "processor" may be used herein to describe devices that may be used in certain aspects of the present disclosure and should not be construed to limit the present disclosure to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternatives may, as appropriate, employ variations of such communication protocols (e.g., modifications or extensions of the protocol that may be made from time-to-time) or other protocols either known or developed in the future.

It should also be noted that logic flows may be described herein to demonstrate various aspects of the disclosure, and should not be construed to limit the present disclosure to any particular logic flow or logic implementation. The described logic may be partitioned into different logic blocks (e.g., programs, modules, functions, or subroutines) without changing the overall results or otherwise departing from the true scope of the disclosure.

Often, logic elements may be added, modified, omitted, performed in a different order, or implemented using different logic constructs (e.g., logic gates, looping primitives, conditional logic, and other logic constructs) without changing the overall results or otherwise departing from the scope of the disclosure.

The present disclosure may be embodied in many different forms, including, but in no way limited to, a graphical processing unit as well as computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, python, C, C++, JAVA, JavaScript or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of aspects of the present disclosure may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" refers generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some embodiments of the disclosure may be implemented as a combination of both software (e.g., a computer program product) and hardware. Still other aspects of the present disclosure are implemented as entirely hardware, or entirely software.

While certain exemplary aspects have been described and shown in the accompanying drawings, it is to be understood that such embodiments are merely illustrative of and are not restrictive on the broad disclosure, and that the aspects of the present disclosure are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described aspects and examples can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously. Those skilled in the art will also appreciate, in view of this disclosure, that different aspects or examples of the disclosure described herein may be combined to form other aspects or examples of the disclosure.

## Claims

1. A diagnostic device (200) for analyzing measurement signals of a rotating machine,
wherein the diagnostic device (200) comprises:
- a measurement signal input unit (201) that is configured to receive at least two measurement signals, wherein the measurement signals include a set of measurement values of a first operational parameter of the rotating machine taken at different operation conditions of the rotating machine and which measurement signals are undersampled
- a control parameter input unit (202) that is configured to receive a second operational parameter of the rotating machine for each of the received measurement signals, wherein the second operational parameter is the rotating speed of the rotating machine or of a component thereof, and
- an analyzing unit (203) that is configured to
- determine the frequency spectra of the at least two undersampled measurement signals by converting the at least two undersampled measurement signals into the frequency domain,
- determine a relation parameter by relating values of the received second operational parameters
- generate a post-processed frequency spectrum by performing a frequency component multiplying process for one or more or for each frequency component in the frequency spectra, wherein frequency components of the frequency spectra are multiplied in said frequency component multiplying process which have a frequency value that matches a preset step distance being identical with a frequency resolution of the measurement signals multiplied by a factor being a vector and including a series of integers,
- compare frequency components of the frequency spectra of the at least two measurements signals with each other, and
- determine a corrected frequency spectrum based on the result of the comparison,
- an output unit (204) configured to output the corrected frequency spectrum to a state diagnosis unit (205) which is configured to diagnose the corrected frequency spectrum for determining a state of the rotating machine,
wherein the comparison of the frequency components is carried out by comparing a first post-processed frequency component of one frequency spectrum with a second post-processed frequency component of another frequency spectrum of the at least two measurement signals which matches the frequency value of the first post-processed frequency component times the relation parameter, and wherein the corrected frequency spectrum is determined by multiplying the amplitude value of the first post-processed frequency component with the amplitude value of the second post-processed frequency component and using the square root value of the result of the multiplication as the corrected amplitude value of the frequency component of the corrected frequency spectrum.

2. The diagnostic device according to claim 1, **characterized in that** a corrected amplitude value which is below a preset threshold amplitude value is set to zero in the corrected frequency spectrum.

3. The diagnostic device according to at least one of the preceding claims, **characterized in that** each frequency component of the post-processed frequency spectrum is compared to each frequency component of another post-processed frequency spectrum, or that selected frequency component(s) and the multiplied frequency components of said selected frequency component(s) are compared with a corresponding frequency components of the another post-processed frequency spectrum.

4. The diagnostic device according to at least one of the preceding claims, **characterized in that** a state diagnosis unit (205) compares the entire corrected frequency spectrum or a window of the corrected frequency spectrum of the rotating machine with a reference frequency spectrum of the rotating machine, wherein the reference frequency spectrum of the rotating machine represents a healthy state of the rotating machine or of a component of the rotating machine.

5. The diagnostic device according to at least one of the preceding claims, **characterized in that** the diagnostic device (200) samples the measurement signals with a sampling rate below the Nyquist criterion or receives the measurement signals at the measurement signal input unit (201) sampled with a sampling rate below the Nyquist criterion together with the value of the sampling rate used for the sampling.

6. The diagnostic device according to at least one of the preceding claims, **characterized in that** the diagnostic device (200) receives the measurement signals in the time domain from a storage unit (206) and/or from a measurement unit (207) and the sampling rate of measurement signals is below twice the maximum frequency value of the measurement values of the measurement signals, and the sampling rate value for each measurement signal is input into the input unit (201, 202).

7. The diagnostic device according to at least one of the preceding claims, **characterized in that** the second operational parameter is the control command value of the rotating speed or a measured value of the rotating speed.

8. The diagnostic device according to at least one of the preceding claims, **characterized in that** the values of the measurement signal include electrical current or the rotation angle of the rotating machine.

9. The diagnostic device according to at least one of the preceding claims, **characterized in that** only one or more predetermined characteristic frequency peaks are analyzed by the analyzing unit as selected frequencies and the one or more operating frequencies of the component of the rotating machine to be diagnosed are the one or more characteristic frequencies.

10. The diagnostic device according to at least one of the preceding claims, **characterized in that** the peak multiplying process includes the steps of shifting a copy of a frequency component in the frequency spectrum by the value of the sampling rate times an integer value which takes values between 1 and a predetermined upper integer value.

11. The diagnostic device (200) according to at least one of the preceding claims, wherein the rotating machine is a machine or a component thereof selected from the following non-exhaustive list of: generator of a wind turbine, motor of a vehicle, motor of a car, motor of a train, motor of an elevator, motor of any other industrial apparatus, a gear, a compressor, a turbine.

12. A computer-implemented diagnostic method (400) performing the steps of
- receiving at least two measurement signals, wherein the measurement signals include a set of measurement values of a first operational parameter of a rotating machine taken at different operation conditions of the rotating machine and which measurement signals are undersampled,
- receiving a second operational parameter of the rotating machine for each of the received measurement signals, wherein the second operational parameter is the rotating speed of the rotating machine or of a component thereof,
- determining the frequency spectra of the at least two undersampled measurement signals by converting the at least two undersampled measurement signals into the frequency domain,
- determining a relation parameter by relating the values of the received second operational parameters ,
- generating a post-processed frequency spectrum by performing a frequency component multiplying process for one or more or for each frequency component in the frequency spectra, wherein frequency components of the frequency spectra are multiplied in said frequency component multiplying process which have a frequency value that matches a preset step distance being identical with a frequency resolution of the measurement signals multiplied by a factor being a vector and including a series of integers,
- comparing frequency components of the post-processed frequency spectra of the at least two measurements signals with each other, and
- determining a corrected frequency spectrum based on the result of the comparison,
- outputting the corrected frequency spectrum for diagnosing the latter for determining a state of the rotating machine,
wherein the comparison of the frequency components is carried out by comparing a first post-processed frequency component of one frequency spectrum with a second post-processed frequency component of another frequency spectrum of the at least two measurement signals which matches the frequency value of the first post-processed frequency component times the relation parameter, and wherein the corrected frequency spectrum is determined by multiplying the amplitude value of the first post-processed frequency component with the amplitude value of the second post-processed frequency component and using the square root value of the result of the multiplication as the corrected amplitude value of the frequency component of the corrected frequency spectrum.

13. A computer program product having computer program logic arranged to put into effect the method according to claim 12, when being executed by a computer.

## Patentansprüche

1. Diagnosevorrichtung (200) zum Analysieren von Messsignalen einer rotierenden Maschine,
wobei die Diagnosevorrichtung (200) umfasst:
- eine Messsignaleingabeeinheit (201), die konfiguriert ist, um mindestens zwei Messsignale zu empfangen, wobei die Messsignale einen Satz von Messwerten eines ersten Betriebsparameters der rotierenden Maschine umfassen, die bei unterschiedlichen Betriebsbedingungen der rotierenden Maschine genommen wurden, und wobei die Messsignale unterabgetastet sind,
- eine Steuerparametereingabeeinheit (202), die konfiguriert ist, um einen zweiten Betriebsparameter der rotierenden Maschine für jedes der empfangenen Messsignale zu empfangen, wobei der zweite Betriebsparameter die Drehzahl der rotierenden Maschine oder einer Komponente davon ist, und
- eine Analyseeinheit (203), die konfiguriert ist, um
- die Frequenzspektren der mindestens zwei unterabgetasteten Messsignale durch Umwandeln der mindestens zwei unterabgetasteten Messsignale in den Frequenzbereich zu bestimmen,
- einen Beziehungsparameter durch In-Beziehung-Setzen von Werten der empfangenen zweiten Betriebsparameter zu bestimmen,
- ein nachverarbeitetes Frequenzspektrum durch Durchführen eines Frequenzkomponentenmultiplikationsprozesses für eine oder mehrere oder für jede Frequenzkomponente in den Frequenzspektren zu erzeugen, wobei Frequenzkomponenten der Frequenzspektren in dem Frequenzkomponentenmultiplikationsprozess multipliziert werden, die einen Frequenzwert aufweisen, der mit einem voreingestellten Schrittabstand übereinstimmt, der identisch mit einer Frequenzauflösung der Messsignale multipliziert mit einem Faktor ist, der ein Vektor ist und eine Reihe von ganzen Zahlen umfasst,
- Frequenzkomponenten der Frequenzspektren der mindestens zwei Messsignale miteinander zu vergleichen, und
- ein korrigiertes Frequenzspektrum basierend auf dem Ergebnis des Vergleichs zu bestimmen,
- eine Ausgabeeinheit (204), die konfiguriert ist, um das korrigierte Frequenzspektrum an eine Zustandsdiagnoseeinheit (205) auszugeben, die konfiguriert ist, um das korrigierte Frequenzspektrum zum Bestimmen eines Zustands der rotierenden Maschine zu diagnostizieren,
wobei der Vergleich der Frequenzkomponenten durch Vergleichen einer ersten nachverarbeiteten Frequenzkomponente eines Frequenzspektrums mit einer zweiten nachverarbeiteten Frequenzkomponente eines anderen Frequenzspektrums der mindestens zwei Messsignale, das mit dem Frequenzwert der ersten nachverarbeiteten Frequenzkomponente mal dem Beziehungsparameter übereinstimmt, durchgeführt wird, und wobei das korrigierte Frequenzspektrum durch Multiplizieren des Amplitudenwerts der ersten nachverarbeiteten Frequenzkomponente mit dem Amplitudenwert der zweiten nachverarbeiteten Frequenzkomponente und Verwenden des Quadratwurzelwerts des Ergebnisses der Multiplikation als den korrigierten Amplitudenwert der Frequenzkomponente des korrigierten Frequenzspektrums bestimmt wird.

2. Diagnosevorrichtung nach Anspruch 1, **dadurch gekennzeichnet, dass** ein korrigierter Amplitudenwert, der unter einem voreingestellten Schwellenamplitudenwert liegt, in dem korrigierten Frequenzspektrum auf null gesetzt wird.

3. Diagnosevorrichtung nach mindestens einem der vorhergehenden Ansprüche, **dadurch gekennzeichnet, dass** jede Frequenzkomponente des nachverarbeiteten Frequenzspektrums mit jeder Frequenzkomponente eines anderen nachverarbeiteten Frequenzspektrums verglichen wird, oder dass ausgewählte Frequenzkomponente(n) und die multiplizierten Frequenzkomponenten dieser ausgewählten Frequenzkomponente(n) mit einer entsprechenden Frequenzkomponente des anderen nachverarbeiteten Frequenzspektrums verglichen werden.

4. Diagnosevorrichtung nach mindestens einem der vorhergehenden Ansprüche, **dadurch gekennzeichnet, dass** eine Zustandsdiagnoseeinheit (205) das gesamte korrigierte Frequenzspektrum oder ein Fenster des korrigierten Frequenzspektrums der rotierenden Maschine mit einem Referenzfrequenzspektrum der rotierenden Maschine vergleicht, wobei das Referenzfrequenzspektrum der rotierenden Maschine einen gesunden Zustand der rotierenden Maschine oder einer Komponente der rotierenden Maschine repräsentiert.

5. Diagnosevorrichtung nach mindestens einem der vorhergehenden Ansprüche, **dadurch gekennzeichnet, dass** die Diagnosevorrichtung (200) die Messsignale mit einer Abtastrate unter dem Nyquist-Kriterium abtastet oder die Messsignale an der Messsignaleingabeeinheit (201), die mit einer Abtastrate unter dem Nyquist-Kriterium abgetastet wurden, zusammen mit dem Wert der Abtastrate, die für die Abtastung verwendet wird, empfängt.

6. Diagnosevorrichtung nach mindestens einem der vorhergehenden Ansprüche, **dadurch gekennzeichnet, dass** die Diagnosevorrichtung (200) die Messsignale im Zeitbereich von einer Speichereinheit (206) und/oder von einer Messeinheit (207) empfängt und die Abtastrate von Messsignalen unter dem doppelten maximalen Frequenzwert der Messwerte der Messsignale liegt, und der Abtastratenwert für jedes Messsignal in die Eingabeeinheit (201, 202) eingegeben wird.

7. Diagnosevorrichtung nach mindestens einem der vorhergehenden Ansprüche, **dadurch gekennzeichnet, dass** der zweite Betriebsparameter der Steuerbefehlswert der Drehzahl oder ein Messwert der Drehzahl ist.

8. Diagnosevorrichtung nach mindestens einem der vorhergehenden Ansprüche, **dadurch gekennzeichnet, dass** die Werte des Messsignals elektrischen Strom oder den Drehwinkel der rotierenden Maschine umfassen.

9. Diagnosevorrichtung nach mindestens einem der vorhergehenden Ansprüche, **dadurch gekennzeichnet, dass** nur eine oder mehrere vorbestimmte charakteristische Frequenzspitzen durch die Analyseeinheit als ausgewählte Frequenzen analysiert werden und die eine oder mehreren Betriebsfrequenzen der zu diagnostizierenden Komponente der rotierenden Maschine die eine oder mehreren charakteristischen Frequenzen sind.

10. Diagnosevorrichtung nach mindestens einem der vorhergehenden Ansprüche, **dadurch gekennzeichnet, dass** der Spitzenmultiplikationsprozess die Schritte des Verschiebens einer Kopie einer Frequenzkomponente in dem Frequenzspektrum um den Wert der Abtastrate mal einen ganzzahligen Wert, der Werte zwischen 1 und einem vorbestimmten oberen ganzzahligen Wert annimmt, umfasst.

11. Diagnosevorrichtung (200) nach mindestens einem der vorhergehenden Ansprüche, wobei die rotierende Maschine eine Maschine oder eine Komponente davon ist, die aus der folgenden nicht erschöpfenden Liste ausgewählt ist: Generator einer Windturbine, Motor eines Fahrzeugs, Motor eines Autos, Motor eines Zugs, Motor eines Aufzugs, Motor einer beliebigen anderen Industrievorrichtung, ein Getriebe, ein Kompressor, eine Turbine.

12. Computerimplementiertes Diagnoseverfahren (400), das die folgenden Schritte durchführt:
- Empfangen von mindestens zwei Messsignalen, wobei die Messsignale einen Satz von Messwerten eines ersten Betriebsparameters einer rotierenden Maschine umfassen, die bei unterschiedlichen Betriebsbedingungen der rotierenden Maschine genommen wurden, und wobei die Messsignale unterabgetastet sind,
- Empfangen eines zweiten Betriebsparameters der rotierenden Maschine für jedes der empfangenen Messsignale, wobei der zweite Betriebsparameter die Drehzahl der rotierenden Maschine oder einer Komponente davon ist,
- Bestimmen der Frequenzspektren der mindestens zwei unterabgetasteten Messsignale durch Umwandeln der mindestens zwei unterabgetasteten Messsignale in den Frequenzbereich,
- Bestimmen eines Beziehungsparameters durch In-Beziehung-Setzen der Werte der empfangenen zweiten Betriebsparameter,
- Erzeugen eines nachverarbeiteten Frequenzspektrums durch Durchführen eines Frequenzkomponentenmultiplikationsprozesses für eine oder mehrere oder für jede Frequenzkomponente in den Frequenzspektren, wobei Frequenzkomponenten der Frequenzspektren in dem Frequenzkomponentenmultiplikationsprozess multipliziert werden, die einen Frequenzwert aufweisen, der mit einem voreingestellten Schrittabstand übereinstimmt, der identisch mit einer Frequenzauflösung der Messsignale multipliziert mit einem Faktor ist, der ein Vektor ist und eine Reihe von ganzen Zahlen umfasst,
- Vergleichen von Frequenzkomponenten der nachverarbeiteten Frequenzspektren der mindestens zwei Messsignale miteinander, und
- Bestimmen eines korrigierten Frequenzspektrums basierend auf dem Ergebnis des Vergleichs,
- Ausgeben des korrigierten Frequenzspektrums zum Diagnostizieren desselben zum Bestimmen eines Zustands der rotierenden Maschine,
wobei
der Vergleich der Frequenzkomponenten durch Vergleichen einer ersten nachverarbeiteten Frequenzkomponente eines Frequenzspektrums mit einer zweiten nachverarbeiteten Frequenzkomponente eines anderen Frequenzspektrums der mindestens zwei Messsignale, das mit dem Frequenzwert der ersten nachverarbeiteten Frequenzkomponente mal dem Beziehungsparameter übereinstimmt, durchgeführt wird, und wobei das korrigierte Frequenzspektrum durch Multiplizieren des Amplitudenwerts der ersten nachverarbeiteten Frequenzkomponente mit dem Amplitudenwert der zweiten nachverarbeiteten Frequenzkomponente und Verwenden des Quadratwurzelwerts des Ergebnisses der Multiplikation als den korrigierten Amplitudenwert der Frequenzkomponente des korrigierten Frequenzspektrums bestimmt wird.

13. Computerprogrammprodukt mit einer Computerprogrammlogik, die angeordnet ist, um das Verfahren nach Anspruch 12 in Kraft zu setzen, wenn es von einem Computer ausgeführt wird.

## Revendications

1. Dispositif de diagnostic (200) pour analyser des signaux de mesure d'une machine rotative,
dans lequel le dispositif de diagnostic (200) comprend :
- une unité d'entrée de signaux de mesure (201) qui est configurée pour recevoir au moins deux signaux de mesure, dans lequel les signaux de mesure incluent un ensemble de valeurs de mesure d'un premier paramètre opérationnel de la machine rotative prises à différentes conditions de fonctionnement de la machine rotative et lesquels signaux de mesure sont sous-échantillonnés,
- une unité d'entrée de paramètre de commande (202) qui est configurée pour recevoir un second paramètre opérationnel de la machine rotative pour chacun des signaux de mesure reçus, dans lequel le second paramètre opérationnel est la vitesse de rotation de la machine rotative ou d'un composant de celle-ci, et
- une unité d'analyse (203) qui est configurée pour
- déterminer les spectres de fréquence des au moins deux signaux de mesure sous-échantillonnés en convertissant les au moins deux signaux de mesure sous-échantillonnés dans le domaine fréquentiel,
- déterminer un paramètre de relation en mettant en relation des valeurs des seconds paramètres opérationnels reçus,
- générer un spectre de fréquence post-traité en effectuant un processus de multiplication de composante de fréquence pour une ou plusieurs ou pour chaque composante de fréquence dans les spectres de fréquence, dans lequel des composantes de fréquence des spectres de fréquence sont multipliées dans ledit processus de multiplication de composante de fréquence qui ont une valeur de fréquence qui correspond à une distance de pas prédéfinie qui est identique à une résolution de fréquence des signaux de mesure multipliés par un facteur qui est un vecteur et incluant une série d'entiers,
- comparer des composantes de fréquence des spectres de fréquence des au moins deux signaux de mesure les unes avec les autres, et
- déterminer un spectre de fréquence corrigé sur la base du résultat de la comparaison,
- une unité de sortie (204) configurée pour délivrer en sortie le spectre de fréquence corrigé à une unité de diagnostic d'état (205) qui est configurée pour diagnostiquer le spectre de fréquence corrigé pour déterminer un état de la machine rotative,
dans lequel la comparaison des composantes de fréquence est effectuée en comparant une première composante de fréquence post-traitée d'un spectre de fréquence avec une seconde composante de fréquence post-traitée d'un autre spectre de fréquence des au moins deux signaux de mesure qui correspond à la valeur de fréquence de la première composante de fréquence post-traitée multipliée par le paramètre de relation, et dans lequel le spectre de fréquence corrigé est déterminé en multipliant la valeur d'amplitude de la première composante de fréquence post-traitée par la valeur d'amplitude de la seconde composante de fréquence post-traitée et en utilisant la valeur de racine carrée du résultat de la multiplication en tant que valeur d'amplitude corrigée de la composante de fréquence du spectre de fréquence corrigé.

2. Dispositif de diagnostic selon la revendication 1, **caractérisé en ce qu'**une valeur d'amplitude corrigée qui est inférieure à une valeur d'amplitude de seuil prédéfinie est réglée à zéro dans le spectre de fréquence corrigé.

3. Dispositif de diagnostic selon au moins l'une des revendications précédentes, **caractérisé en ce que** chaque composante de fréquence du spectre de fréquence post-traitée est comparée à chaque composante de fréquence d'un autre spectre de fréquence post-traité, ou **en ce que** la(les) composante(s) de fréquence sélectionnée(s) et les composantes de fréquence multipliées de cette(ces) composante(s) de fréquence sélectionnée(s) sont comparées à une composante de fréquence correspondante de l'autre spectre de fréquence post-traité.

4. Dispositif de diagnostic selon au moins l'une des revendications précédentes, **caractérisé en ce qu'**une unité de diagnostic d'état (205) compare l'ensemble du spectre de fréquence corrigé ou une fenêtre du spectre de fréquence corrigé de la machine rotative à un spectre de fréquence de référence de la machine rotative, dans lequel le spectre de fréquence de référence de la machine rotative représente un état sain de la machine rotative ou d'un composant de la machine rotative.

5. Dispositif de diagnostic selon au moins l'une des revendications précédentes, **caractérisé en ce que** le dispositif de diagnostic (200) échantillonne les signaux de mesure avec une fréquence d'échantillonnage inférieure au critère de Nyquist ou reçoit les signaux de mesure au niveau de l'unité d'entrée de signaux de mesure (201) échantillonnés avec une fréquence d'échantillonnage inférieure au critère de Nyquist conjointement avec la valeur de la fréquence d'échantillonnage utilisée pour l'échantillonnage.

6. Dispositif de diagnostic selon au moins l'une des revendications précédentes, **caractérisé en ce que** le dispositif de diagnostic (200) reçoit les signaux de mesure dans le domaine temporel à partir d'une unité de stockage (206) et/ou à partir d'une unité de mesure (207) et la fréquence d'échantillonnage de signaux de mesure est inférieure à deux fois la valeur de fréquence maximale des valeurs de mesure des signaux de mesure, et la valeur de fréquence d'échantillonnage pour chaque signal de mesure est entrée dans l'unité d'entrée (201, 202).

7. Dispositif de diagnostic selon au moins l'une des revendications précédentes, **caractérisé en ce que** le second paramètre opérationnel est la valeur d'instruction de commande de la vitesse de rotation ou une valeur mesurée de la vitesse de rotation.

8. Dispositif de diagnostic selon au moins l'une des revendications précédentes, **caractérisé en ce que** les valeurs du signal de mesure comprennent le courant électrique ou l'angle de rotation de la machine rotative.

9. Dispositif de diagnostic selon au moins l'une des revendications précédentes, **caractérisé en ce que** seulement un ou plusieurs pics de fréquence caractéristiques prédéterminés sont analysés par l'unité d'analyse en tant que fréquences sélectionnées et les une ou plusieurs fréquences de fonctionnement du composant de la machine rotative à diagnostiquer sont les une ou plusieurs fréquences caractéristiques.

10. Dispositif de diagnostic selon au moins l'une des revendications précédentes, **caractérisé en ce que** le processus de multiplication de pic inclut les étapes consistant à décaler une copie d'une composante de fréquence dans le spectre de fréquence de la valeur de la fréquence d'échantillonnage multipliée par une valeur entière qui prend des valeurs entre 1 et une valeur entière supérieure prédéterminée.

11. Dispositif de diagnostic (200) selon au moins l'une des revendications précédentes, dans lequel la machine rotative est une machine ou un composant de celle-ci sélectionné à partir de la liste non exhaustive suivante : un générateur d'une éolienne, un moteur d'un véhicule, un moteur d'une voiture, un moteur d'un train, un moteur d'un ascenseur, un moteur de tout autre appareil industriel, un engrenage, un compresseur, une turbine.

12. Procédé de diagnostic mis en œuvre par ordinateur (400) effectuant les étapes consistant à :
- recevoir au moins deux signaux de mesure, dans lequel les signaux de mesure incluent un ensemble de valeurs de mesure d'un premier paramètre opérationnel d'une machine rotative prises à différentes conditions de fonctionnement de la machine rotative et lesquels signaux de mesure sont sous-échantillonnés,
- recevoir un second paramètre opérationnel de la machine rotative pour chacun des signaux de mesure reçus, dans lequel le second paramètre opérationnel est la vitesse de rotation de la machine rotative ou d'un composant de celle-ci,
- déterminer les spectres de fréquence des au moins deux signaux de mesure sous-échantillonnés en convertissant les au moins deux signaux de mesure sous-échantillonnés dans le domaine fréquentiel,
- déterminer un paramètre de relation en mettant en relation les valeurs des seconds paramètres opérationnels reçus,
- générer un spectre de fréquence post-traité en effectuant un processus de multiplication de composante de fréquence pour une ou plusieurs ou pour chaque composante de fréquence dans les spectres de fréquence, dans lequel des composantes de fréquence des spectres de fréquence sont multipliées dans ledit processus de multiplication de composante de fréquence qui ont une valeur de fréquence qui correspond à une distance de pas prédéfinie qui est identique à une résolution de fréquence des signaux de mesure multipliés par un facteur qui est un vecteur et incluant une série d'entiers,
- comparer des composantes de fréquence des spectres de fréquence post-traités des au moins deux signaux de mesure les unes avec les autres, et
- déterminer un spectre de fréquence corrigé sur la base du résultat de la comparaison,
- délivrer en sortie le spectre de fréquence corrigé pour diagnostiquer celui-ci pour déterminer un état de la machine rotative,
dans lequel
la comparaison des composantes de fréquence est effectuée en comparant une première composante de fréquence post-traitée d'un spectre de fréquence avec une seconde composante de fréquence post-traitée d'un autre spectre de fréquence des au moins deux signaux de mesure qui correspond à la valeur de fréquence de la première composante de fréquence post-traitée multipliée par le paramètre de relation, et dans lequel le spectre de fréquence corrigé est déterminé en multipliant la valeur d'amplitude de la première composante de fréquence post-traitée par la valeur d'amplitude de la seconde composante de fréquence post-traitée et en utilisant la valeur de racine carrée du résultat de la multiplication en tant que valeur d'amplitude corrigée de la composante de fréquence du spectre de fréquence corrigé.

13. Produit de programme informatique ayant une logique de programme informatique agencée pour mettre en œuvre le procédé selon la revendication 12, lorsqu'il est exécuté par un ordinateur.
